# EUROPEAN PATENT APPLICATION

(11) **EP 0 763 946 A2**
(43) Date of publication of application: **19.03.1997**
(21) Application number: 96301551.6
(22) Date of filing: 06.03.1996
(51) Int. Cl.: H04N 9/804, H04N 5/783

(54) **Recording and reproducing method of digital video tape for trick play and apparatus thereof**

(30) Priority: 14.09.1995 KR 9530073
(71) Applicant: Samsung Electronics Co., Ltd., Suwon-City, Kyungki-do 441-742 (KR)
(72) Inventor: Jeon, Jong-gu, Paldal-gu, Suwon-city, Kyungki-do (KR)
(74) Representative: Chugg, David John

(57) **Abstract**

There is provided a recording and reproducing method of a digital video tape and an apparatus thereof. In the recording method and the apparatus thereof, the normal data of an ATV signal received is stored, intra-frame data which can be independently decoded is extracted (150) from the ATV signal, and windowed (152) through partial decoding, and the windowed intra-frame data is recorded (160) as trick play data in the digital tape. In the reproducing method and the apparatus thereof, normal and trick play data recorded in the digital video tape is reproduced (180), and the trick play data extracted (182) and formatted during a trick play reproduction and the normal data extracted (184) during a normal play reproduction are selectively output (188). Thus, the advantages that various types of scanners can be used at a 13-multiple-speed which is the maximum multiple-speed, or below and that high-speed trick play can be performed are obtained.

## Description

The present invention relates to a recording and reproducing method of digital video tapes and an apparatus thereof and, more particularly, to a recording and reproducing method of digital video tapes, wherein an advanced television (ATV) signal is recorded and reproduced for trick play, and an apparatus thereof.

A digital video cassette recorder (hereinafter, referred to as a DVCR) for consumer use, which carries out the recording and reproduction of ATV signals on digital video tapes of a standard definition-video cassette recorder (SD-VCR) is currently under development. The bit stream of the SD-VCR is transmitted at 24.9Mbits per second while the bit stream of the ATV signal is transmitted at 19.3Mbits per second. Thus, there remains an area for recording 5.6Mbits per second. How to generate trick play data to be recorded in the remaining area of the video sector and the area, which is not in use, of the audio sector and how to reproduce the recorded trick play data are essential to the performance of trick play at a variety of trick play speeds using various types of scanners, to the improvement of image quality and to the removal of noise. Accordingly, studies on that concern are actively being made.

As an effort of the studies, the present invention offers an approach to the realization of a preferred home digital video cassette recorder by exploring how to generate trick play data to be recorded on a tape and reproduce the recorded data.

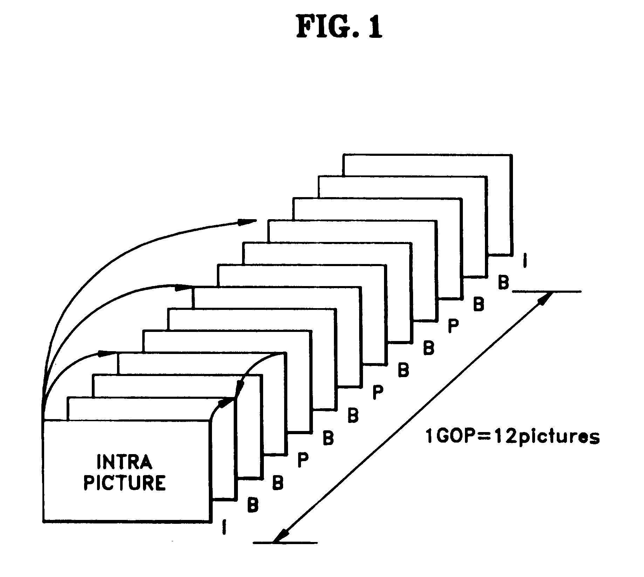

As shown in Figure 1, the transport bit stream of an ATV signal is comprised of repeated group-of-pictures (hereinafter, referred to as GOPs), each of which has pictures arranged, e.g., in the following order.
I-B-B-P-B-B-P-B-B-P-B-B-I

Here, an intra-coded picture (hereinafter, called an I-picture) having the most bits assigned thereto has great impact on the image quality of the whole GOP and the encoding capability of a predictive-coded picture (hereinafter, called a P-picture) having the most bits second to the I-picture assigned thereto. The I-picture is an intra-frame which allows independent coding. The P-picture affects the subsequent P-picture and a bidirectionally predictive-coded picture (hereinafter, called a B-picture) having the least bits assigned thereto. The P-picture is a predicted frame which is encoded by using movement compensation from a previous intra-frame or predicted frame. The B-picture is a bidirectionally predicted frame encoded by using movement compensation of a previous intra-frame, a following intra-frame, a previous predicted frame, or a following predicted frame.

Here, one picture includes a number of slices, and each slice is comprised of a number of macro blocks (hereinafter, called MBs). Each MB is comprised of a number of discrete cosine transform (hereinafter, called DCT) blocks.

When recording an MPEG (moving picture expert group)-2 bit stream ATV signal on a video cassette recorder tape for trick play in a conventional method, the B- and P-pictures can be decoded only after the decoding of the I-pictures is completed, thereby making high-speed reproduction of the ATV signal including the P-pictures impossible.

It is an aim of preferred embodiments of the present invention to provide a recording and reproducing method of a digital video tape for trick play, wherein reproduction is performed by partially decoding the bit streams of the I-pictures in a GOP, recording the decoded bit streams in a track area of the tape as trick play data, and reading out the recorded bit streams.

It is another aim of preferred embodiments of the present invention to provide a recording and reproducing apparatus of a digital video tape for trick play.

According to a first aspect of the present invention there is provided a recording method of a digital video tape for trick play, for recording on the digital video tape normal data and trick play data obtained by dividing an ATV signal including first frame data which is provided at a predetermined interval and is permitted to be independently decoded and second frame data which is impossible to decode independently, the method comprising the steps of:
(a) detecting side information through the decoding of the ATV signal, storing the normal data included in the ATV signal, and selecting only the first frame data;
(b) windowing the first frame data to have a predetermined size according to the side information;
(c) transforming the windowed first frame data into data of an MPEG-2 bit stream, and correcting necessary header information according to the side information;
(d) mixing the normal data and the first frame data;
(e) formatting the mixed data in the form of sync blocks and adding the various codes in the formatted data; and
(f) recording the first and second frame data on the digital video tape so as to be used as the normal data and the trick play data, respectively.

Preferably, said step (a) comprises the steps of:
storing said normal data of said ATV signal;
decoding said ATV signal and detecting a transport layer header of said side information;
decoding a video signal of said ATV signal and detecting a video layer header of said side information;
storing said transport layer header and said video layer header; and
selecting said first frame data from said ATV signal.

There is also provided a reproducing method of a digital video tape for trick play according to a second aspect of the present invention, for providing decoding means with first frame data which is provided at a predetermined interval and is permitted to be independently decoded and second frame data which is impossible to decode independently, both of which are respectively recorded on the digital video tape for normal data and trick play data, the method comprising the steps of:
reproducing an ATV bit stream recorded on the digital video tape;
determining whether the reproduction is due to normal play, or trick play;
extracting the normal data from the ATV bit stream during the normal play reproduction;
extracting the first frame data which is the trick play data from the ATV bit stream during the trick play reproduction;
temporarily storing the trick play data; and
selectively providing the trick play data and the normal data to the decoding means.

Preferably, said storing step comprises the step of formatting said trick play data to be decoded in said decoding means.

According to a third aspect of the present invention, there is provided a recording apparatus of a digital video tape, for recording on the digital video tape normal data and trick play data which are obtained by dividing an ATV signal including first frame data which is provided at a predetermined interval and is permitted to be independently decoded and second frame data which is impossible to decode independently, the apparatus comprising;
frame selecting means for detecting side information through the decoding of the ATV signal, storing the normal data separated from the ATV signal, selecting only the first frame data, and outputting the selected first frame data;
windowing means for windowing the first frame data to have a predetermined size according to the side information;
information correcting means for transforming the windowed first frame data into data of an MPEG-2 bit stream, and correcting necessary header information by means of the side information received from the frame selecting means;
data mixing means for mixing the normal data output from the frame selecting means and the first frame data output from the information correcting means;
formatting and adding means for formatting the output of the data mixing means in sync blocks and adding various codes in the formatted data; and
recording means for recording the output of the formatting and adding means onto the digital video tape respectively as the normal data and the trick play data.

Preferably, said frame selecting means comprises:
first storing means for selecting and storing said normal data from said ATV signal;
first decoding means for decoding said ATV signal, detecting a transport layer header of said side information, and outputting said detected transport layer header;
second decoding means for detecting and decoding said ATV signal received, and detecting a video layer header of said side information, and outputting said detected video layer header;
second storing means for storing said transport layer header and said video layer header; and
first frame selecting means for receiving the output of said second decoding means, selecting the first frame data, and outputting said selected first frame data.

According to a fourth aspect of the present invention, there is also provided a reproducing apparatus of a digital video tape for trick play, for providing decoding means with first frame data which is provided at a predetermined interval and is permitted to be independently decoded and second frame data which is impossible to decode independently, which are recorded on the digital video tape so as to be used respectively as normal data and trick play data, the apparatus comprising;
reproducing means for reproducing an ATV bit stream recorded on the digital video tape;
normal data extracting means for extracting the normal data from the ATV bit stream received from the reproducing means during a normal play reproduction, and outputting the extracted normal data;
trick play data extracting means for extracting the first frame data which is the trick play data from the ATV bit stream received from the reproducing means during a trick play reproduction, and outputting the extracted first frame data;
storing means for temporarily storing the first frame data; and
selecting means for selectively providing the first frame data and the normal data to the decoding means.

Preferably, said storing means formats said trick play data so as to be decoded in said decoding means.

According to a fifth aspect of the invention, there is provided a recording and reproducing method of a digital video tape for trick play, the recording method comprising the steps of storing normal data of a received ATV signal, decoding and extracting intra-frame data from the ATV signal, windowing the decoded data and recording it as trick play data on the video tape along with the normal data the reproducing method comprising a determining step in which it is determined whether recorded data is normal or trick play data, if data is normal data then carrying out a normal reproduction mode, and if data is trick play data, extracting said trick play data and performing trick play.

For a better understanding of the invention, and to show how embodiments of the same may be carried into effect, reference will now be made, by way of example, to the accompanying diagrammatic drawings, in which:
Figure 1 illustrates an arrangement of a group of pictures including three types of coded pictures;
Figure 2 illustrates the structure of a track in the digital video tape of an SD-VCR;
Figures 3A to 3C illustrates the head structures and track scan paths of several types of scanners for reproducing a signal recorded on the tape of the SD-VCR of Figure 2;
Figure 4 illustrates the structure of a preferred embodiment of a video sector in each track of a digital video tape of an embodiment of the present invention;
Figure 5 is a flow chart for explaining a recording method of a digital video tape for trick play according to embodiments of the present invention;
Figure 6 is a flow chart for detailedly explaining step 100 shown in Figure 5;
Figure 7 is a flowchart for explaining a reproducing method of a digital video tape for trick play according to embodiments of the present invention;
Figure 8 is a block diagram for explaining a recording apparatus of a digital video tape for trick play according to embodiments of the present invention;
Figure 9 is a block diagram for explaining the frame selecting portion shown in Figure 8 in detail;
Figure 10 is a diagram for explaining a windowing process of an intra-frame; and
Figure 11 is a block diagram for explaining a reproducing apparatus of a digital video tape for trick play according to embodiments of the present invention.

Embodiments of the present invention will be described in more detail referring to the attached drawings.

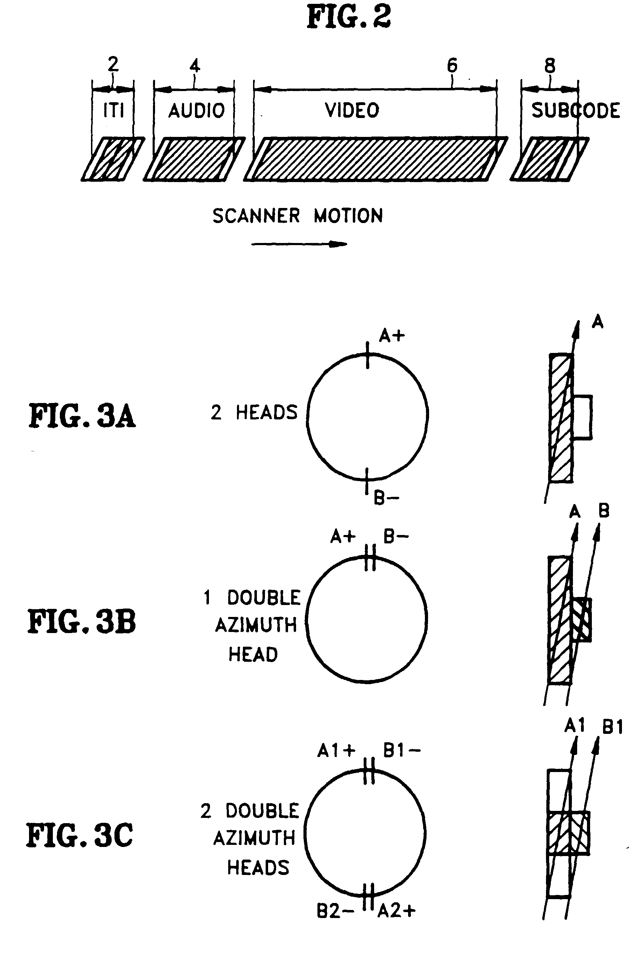

Figure 2 illustrates the structure of a track in the digital video tape of an SD-VCR. The SD-VCR records an ATV signal by using the recording area of the track shown in Figure 2. That is, video data and audio data for normal play of the ATV signal are recorded in a video sector. The bit stream of the SD-VCR is transmitted at 24.9Mbits per second while the bit stream of the ATV signal is transmitted at 19.3Mbits per second. Thus, there remains an area for recording about 5.6Mbits per second.

The track shown in Figure 2 includes an ITI (insert and track information) sector 2, an audio sector 4, a video sector 6 and a subcode sector 8 located in sequence from a track starting portion wherein a scanner, i.e. a head begins to scan, and a gap is employed between sectors. ITI sector 2 includes a pre-amble area, a start-sync block area, a track information area and a post-amble area. Subcode sector 8 has a subcode pre-amble area, a subcode sync block area and a subcode post-amble area. After subcode sector 8, there exists an overwrite margin.

Figures 3A to 3C illustrate the head structures and track scan paths of several types of scanners on a track for reproducing a signal recorded on the tape of the SD-VCR of Figure 2. A 2-head scanner, a 1-double azimuth head scanner, and a 2-double azimuth head scanner are shown from the top. Recording of trick play data which can be adapted to all these various heads is required, which is satisfied by a recording method of the present invention.

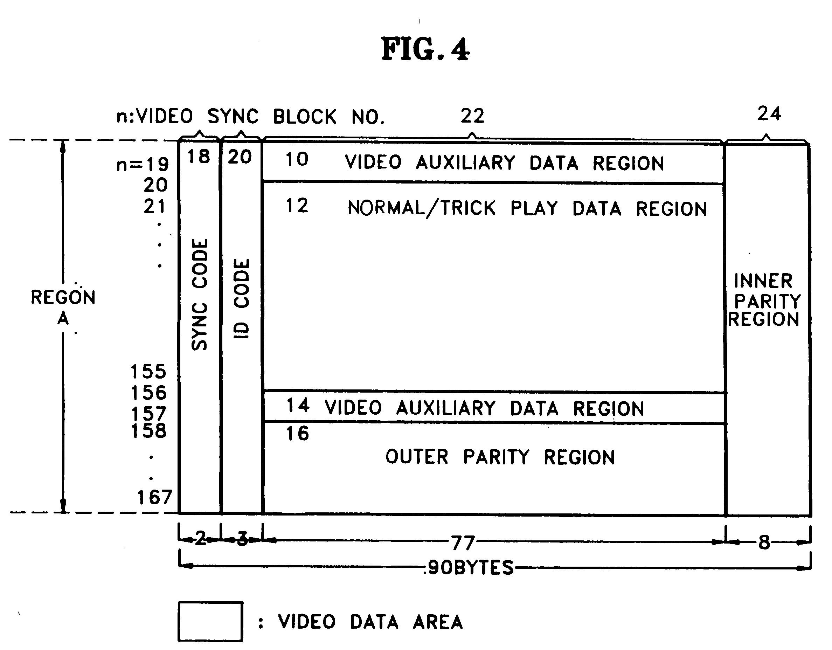

Video sector 6 shown in Figure 2 is comprised of 149 sync blocks as shown in Figure 4. That is, video sector 6 includes a first video auxiliary data region 10 having sync blocks 19 and 20, a normal and trick play data region 12 having sync blocks 21 to 155, a second video auxiliary data region 14 having sync blocks 156 and 157, and an outer parity region 16 for correcting errors having sync blocks 158 to 167. Each sync block has a 2-byte sync code 18, a 3-byte identification code 20, 77-byte data 22, and an 8-byte inner parity region 24 for correcting errors.

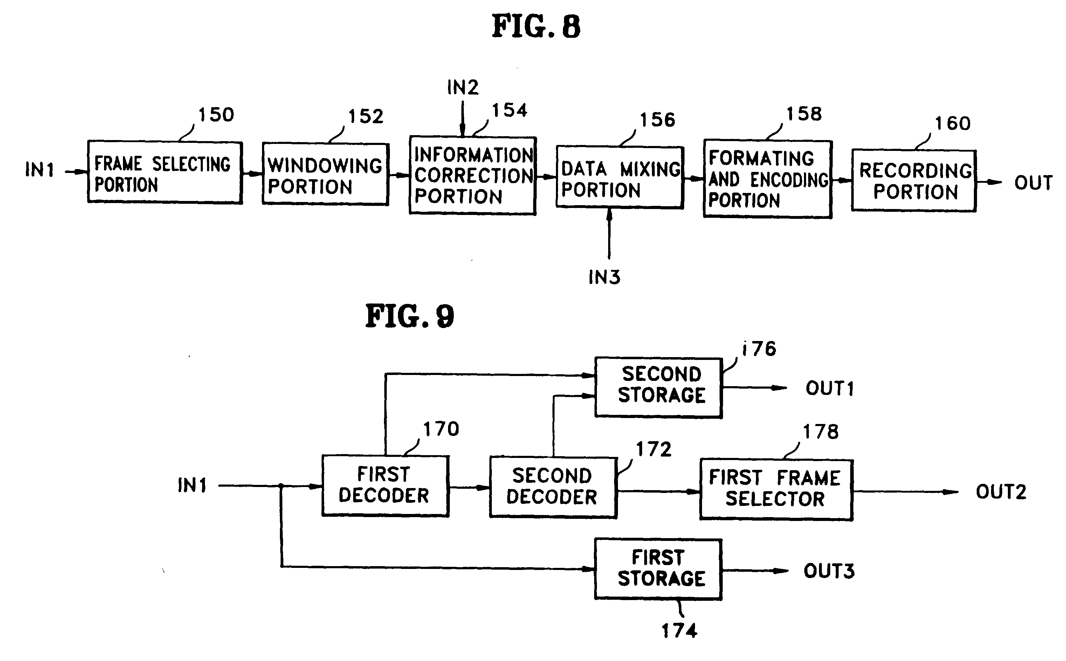

The exemplary recording apparatus of a digital video tape for trick play according to the present invention shown in Figure 8 is comprised of a frame selecting portion 150, a windowing portion 152, an information correcting portion 154, a data mixing portion 156, a formatting and encoding portion 158 and a recording portion 160.

Frame selecting portion 150 as shown in Figure 9 is comprised of a first decoder 170, a second decoder 172, a first storage 174, a second storage 176, and a first frame selector 178.

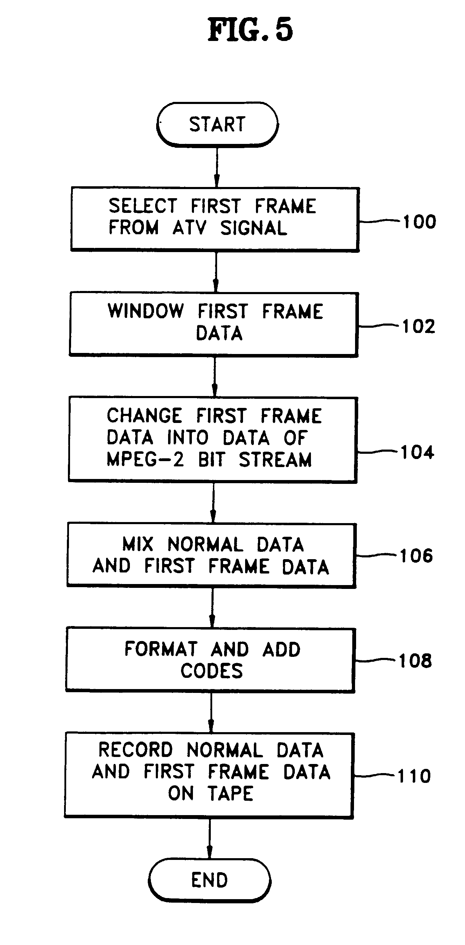

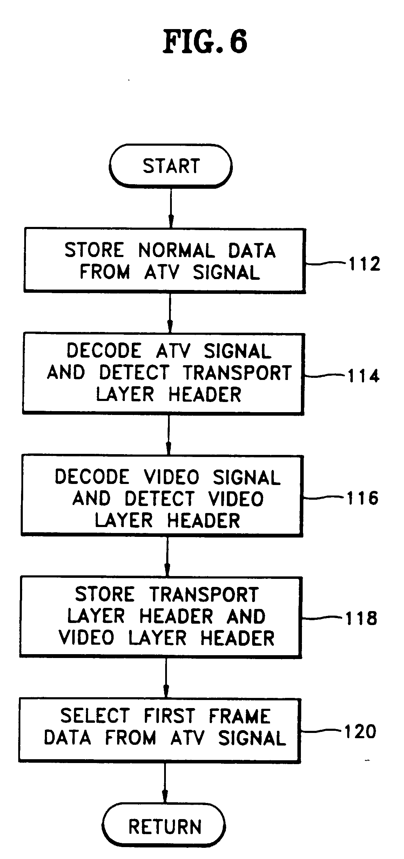

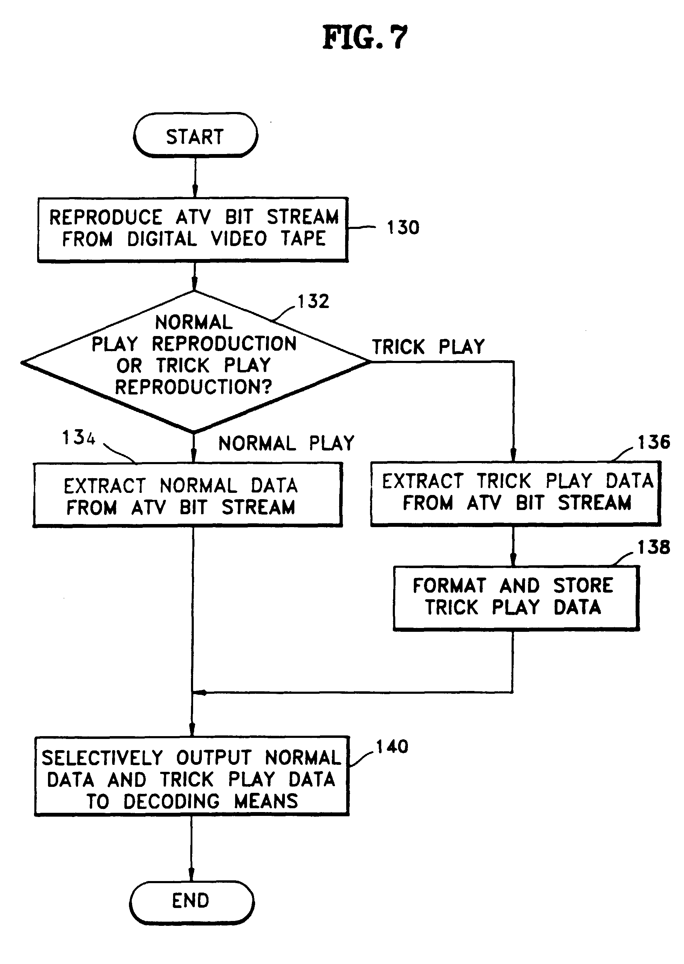

A recording and reproducing method of a digital video tape for trick play, and an apparatus thereof according to the present invention will be explained in more detail, referring to Figures 5 through 9.

The frame selecting portion 150 shown in Figure 8 receives an ATV signal through an input port IN1 and selects first frame data which can be independently decoded, in step 100. To describe step 100 shown in Figure 5 in more detail, first storage 174 shown in Figure 9 stores normal data from the transport bit stream received through input port IN1, in step 112. In step 114, first decoder 170 decodes the transport bit stream, i.e., the ATV signal, received from input port IN1, and detects a transport layer header to be output. In step 116, second decoder 172 detects a video signal from the output of first decoder 170, and detects a video layer header from the detected video signal to be out. In step 118, second storage 176 stores the transport layer header and the video layer header as side information. On the other hand, first frame selector 178 selects an intra-frame from the input ATV bit stream in step 120 to be out.

In step 102, after step 100 is performed, windowing portion 152 shown in Figure 8 windows the intra-frame selected in frame selecting portion 150 to have a predetermined size (X, Y).

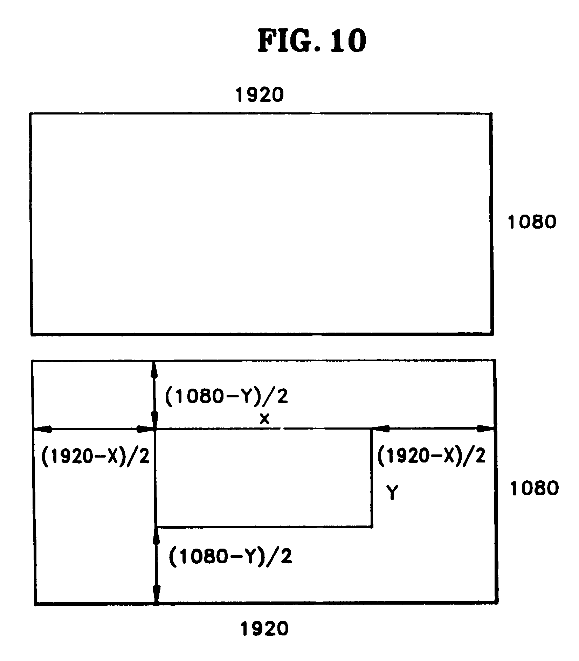

The windowing method of step 102 shown in Figure 5 will be explained referring to Figure 10.

A sequence header in the MPEG-2 video layer header includes headers indicating a horizontal size value and a vertical size value, through which the size of an encoded picture can be determined. The largest picture in the MPEG-2 bit stream has a picture size of 1920×1080. Since intra-frame having such a size cannot be all recorded in surplus tracks as trick play data, the intra-frame is windowed to have an appropriate picture size (X, Y). When recording an ATV signal in an ATV-VCR, there is an area for 5.6Mbits left, which is calculated to be 30 sync blocks out of 135 sync blocks constituting normal and trick play data region 12. This remaining area is referred to as the surplus area. The 30 remaining sync blocks out of its sync blocks are calculated to be 27 tracks out of 120 tracks in terms of the number of tracks with respect to a GOP. These 27 tracks are referred to as the surplus tracks, which can be available as an area for trick play.

When performing a windowing operation as shown in Figure 10, one frame can be recorded in one track. A method for extracting trick play data by partially decoding an intra-frame having a picture size of 720×480 is described as follows.

Since the least significant bit (LSB) of a slice-starting-code in a slice header of an MPEG-2 bit stream indicates the vertical position of a slice, the position in a vertical direction to be windowed can be determined. The position in a horizontal direction can be determined by a macro block-address-increase header in a macro block header. The number of DCT blocks, which is windowed, having a picture size of 720 ×480 is 8100, which is calculated to be 72900=8100×9bits, assuming that a DC coefficient uses 9bits, in terms of the number of bits since the MPEG-2 sampling format is a 4:2:0 format. The number of video bits which can be recorded in one track is 83160 bits=135 syncs × 77bytes. Accordingly, assuming that the DC coefficient is 9bits, the DC bits of one frame can be all recorded in one track. The DC bits are variable-length-coded, thereby occupying less bits than the assumed 9bits. Thus, AC bits can be recorded in the remaining area other than the area wherein the DC bits are recorded. At this time, as the picture size grows smaller, the resolution of the picture increases.

Information correcting portion 154 shown in Figure 8 constructs the windowed intra-frame in the form of an MPEG-2 bit stream, receives the side information stored in second storage 176 through an input port IN2, and corrects necessary header information to be output, in step 104. Thereafter, in step 106, data mixing portion 156 mixes the normal data stored in first storage 174 through an input port IN3 and the intra-frame data output from information correcting portion 154, and outputs the mixed data. In step 108, then, formatting and encoding portion 158 formats the output of data mixing portion 156 in the form of sync blocks, and adds, e.g., identification codes to the formatted data in the form of sync blocks to be output. After step 108, recording portion 160 records the normal data and the trick play data on the digital video tape, in step 110.

A reproducing method for trick play and an apparatus thereof according to embodiments of the present invention will be explained referring to the attached drawings.

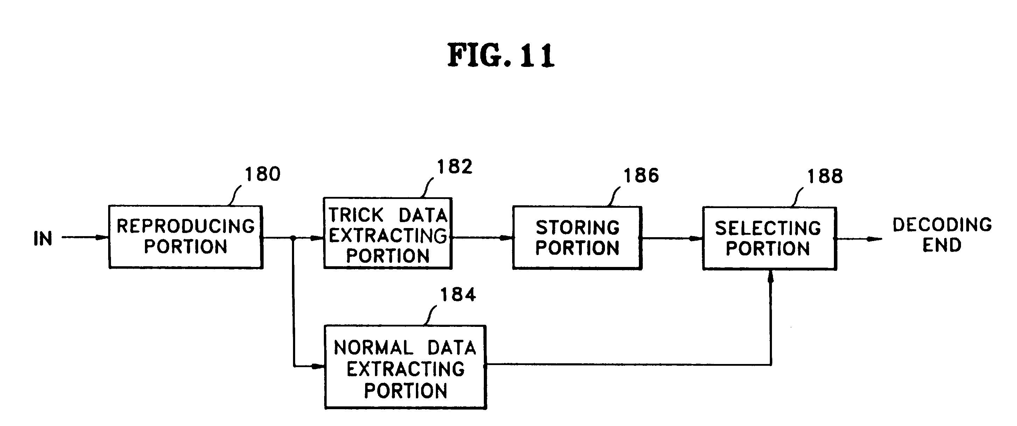

As shown in Figure 11, the reproducing apparatus of a digital video tape for trick play according to the present invention is comprised of a reproducing portion 180, a trick data extracting portion 182, a normal data extracting portion 184, a storing portion 186, and a selecting portion 188.

Reproducing portion 180 shown in Figure 11 reproduces the ATV bit stream recorded in the digital video tape in step 130. Thereafter, in step 132, it is determined in a system control portion (not shown) whether the reproduced ATV bit stream comes from normal play reproduction or trick play reproduction. If it is determined in step 132 as the normal play reproduction, normal data extracting portion 184 reads out normal play data from the ATV bit stream in step 134. If it is determined as the trick play reproduction, trick data extracting portion 182 reads out trick play data in step 136. The windowed trick play data is temporarily stored in storing portion 186 and is formatted to be decoded in a decoding end in step 138. After steps 134 and 138, selecting portion 188 selectively outputs the trick play data and the normal data in step 140.

As described above, the recording and reproducing method of a digital video tape for trick play and the apparatus thereof has the advantages that various types of scanners can be all used at a 13-multiple-speed which is the maximum multiple-speed, or below and high-speed trick play can be performed stably in recording an ATV bit stream in a VCR, by repeatedly recording data for one trick play per track in 27 tracks since one sequence has 12 frames and thus can be recorded in 120 tracks, of which 27 tracks are used for recording trick play data.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A recording method of a digital video tape for trick play, for recording on the digital video tape normal data and trick play data obtained by dividing an ATV signal including first frame data which is provided at a predetermined interval and is permitted to be independently decoded and second frame data which is impossible to decode independently, the trick play recording method comprising the steps of:
(a) detecting side information through the decoding of said ATV signal, storing said normal data included in said ATV signal, and selecting only said first frame data (100);
(b) windowing said first frame data to have a predetermined size according to said side information (102);
(c) transforming said windowed first frame data into data of an MPEG-2 bit stream, and correcting necessary header information according to said side information (104);
(d) mixing said normal data and said first frame data (106);
(e) formatting said mixed data in the form of sync blocks and adding various codes in the formatted data (108); and
(f) recording said first and second frame data on said digital video tape so as to be used for said normal data and said trick play data, respectively (110).

2. A recording method according to claim 1, wherein said step (a) comprises the steps of:
storing said normal data of said ATV signal (112);
decoding said ATV signal and detecting a transport layer header of said side information (114);
decoding a video signal of said ATV signal and detecting a video layer header of said side information (116);
storing said transport layer header and said video layer header (118); and
selecting said first frame data from said ATV signal (120).

3. A reproducing method of a digital video tape for trick play, for providing decoding means with first frame data which is provided at a predetermined interval and is permitted to be independently decoded and second frame data which is impossible to decode independently, both of which are recorded on the digital video tape for normal data and trick play data, the method comprising the steps of:
reproducing an ATV bit stream recorded on said digital video tape (130);
determining whether said reproduction is due to normal play, or trick play (132);
extracting said normal data from said ATV bit stream during said normal play reproduction (134);
extracting said first frame data which is the trick play data from said ATV bit stream during said trick play reproduction (136);
temporarily storing said trick play data (138); and
selectively providing said trick play data and said normal data to said decoding means (140).

4. A reproducing method according to claim 3, wherein said storing step (138) comprises the step of formatting said trick play data to be decoded in said decoding means.

5. A recording apparatus of a digital video tape, for recording on the digital video tape normal data and trick play data which are obtained by dividing an ATV signal including first frame data which is provided at a predetermined interval and is permitted to be independently decoded and second frame data which is impossible to decode independently, the apparatus comprising;
frame selecting means (150) for detecting side information through the decoding of the ATV signal, storing said normal data separated from said ATV signal, selecting only said first frame data, and outputting said selected first frame data;
windowing means (152) for windowing said first frame data to have a predetermined size according to said side information;
information correcting means (154) for transforming said windowed first frame data into data of an MPEG-2 bit stream, and correcting necessary header information by means of said side information received from said frame selecting means (150);
data mixing means (156) for mixing said normal data output from said frame selecting means (150) and said first frame data output from said information correcting means (154);
formatting and adding means (158) for formatting the output of said data mixing means in the form of sync blocks and adding various codes in the formatted data; and
recording means (160) for recording the output of said formatting and adding means onto said digital video tape so as to be used for said normal data and said trick play data.

6. A recording apparatus of a digital video tape according to claim 5, wherein said frame selecting means comprises:
first storing means (174) for selecting and storing said normal data from said ATV signal;
first decoding means (170) for decoding said ATV signal, detecting a transport layer header of said side information, and outputting said detected transport layer header;
second decoding means (172) for detecting and decoding said ATV signal received, and detecting a video layer header of said side information, and outputting said detected video layer header;
second storing means (176) for storing said transport layer header and said video layer header; and
first frame selecting means (178) for receiving the output of said second decoding means (172), selecting the first frame data, and outputting said selected first frame data.

7. A reproducing apparatus of a digital video tape for trick play, for providing decoding means with first frame data which is provided at a predetermined interval and is permitted to be independently decoded and second frame data which is impossible to decode independently, which are recorded on the digital video tape so as to be respectively used for normal data and trick play data, the apparatus comprising;
reproducing means (180) for reproducing an ATV bit stream recorded on said digital video tape;
normal data extracting means (184) for extracting said normal data from said ATV bit stream received from said reproducing means (180) during a normal play reproduction, and outputting said extracted normal data;
trick play data extracting means (182) for extracting said first frame data which is the trick play data from said ATV bit stream received from said reproducing means (180) during a trick play reproduction, and outputting said extracted first frame data;
storing means (186) for temporarily storing said first frame data; and
selecting means (188) for selectively providing said first frame data and said normal data to said decoding means.

8. A reproducing apparatus according to claim 7, wherein said storing means (186) formats said trick play data so as to be decoded in said decoding means.

9. A recording and reproducing method of a digital video tape for trick play, the recording method comprising the steps of storing normal data of a received ATV signal, decoding and extracting intra-frame data from the ATV signal, windowing the decoded data and recording it as trick play data on the video tape along with the normal data the reproducing method comprising a determining step in which it is determined whether recorded data is normal or trick play data, if data is normal data then carrying out a normal reproduction mode, and if data is trick play data, extracting said trick play data and performing trick play.

10. A method according to claim 9, further comprising any feature, or combination of features from the accompanying specification, claims, abstract or drawings.
